# EUROPEAN PATENT SPECIFICATION

(11) **EP 0 270 193 B1**
(45) Date of publication and mention of the grant of the patent: **07.04.1993**
(21) Application number: 87202390.8
(22) Date of filing: 02.12.1987
(51) Int. Cl.: G03B 21/62

(54) **Light-transmissive screen and method for manufacturing such a screen**
Lichtdurchlässiger Schirm und Verfahren zur Herstellung eines solchen Schirmes
Ecran à transmission de lumière et méthode de fabrication d'un tel écran

(30) Priority: 05.12.1986 US 938665; 05.12.1986 US 938664; 05.12.1986 US 938669
(43) Date of publication of application: 08.06.1988
(73) Proprietor: Philips Electronics N.V., 5621 BA Eindhoven (NL)
(72) Inventor: Fitzpatrick, Brian John, NL-5656 AA Eindhoven (NL)
(74) Representative: Peters, Rudolf Johannes

(56) References cited:
- US-A- 3 475 169
- US-A- 4 573 764
- US-A- 4 605 283
- US-A- 4 688 093

## Description

The invention relates to a light-transmissive viewing screen, having a surface including a multiplicity of raised lenticules having respective peaks and side walls, said side walls defining grooves between the lenticules, in said grooves being deposited a multiplicity of light-absorbing particles. The invention relates as well to methods for manufacturing such a screen.

Light-transmissive viewing screens such as rear projection screens are commonly provided with integral lenticules or lens elements. These lens elements are shaped to collect image-forming light rays projected onto the rear side of the screen by one or more projection tubes, and to concentrate the rays to form a bright image at the peaks of lens elements on the front or viewing side of the screen.

It is well known that providing a coating of masking material in grooves between the light-emitting lens elements, to absorb ambient light, enhances image contrast. Examples of lenticular screens with such masking material in accordance with the introductory paragraph are described in U.S. Patent 4 605 283 to Douglas A. Stanton. U.S. Patent 4 605 283 recognizes the desirability of minimizing contact of the masking material with the screen surfaces defining the grooves. The masking material not only absorbs ambient light incident to the masked grooves at the viewing side of the screen, but also partially absorbs the image-forming light entering the lens elements from the rear of the screen, thereby attenuating the image-forming light eventually reaching the light emitting peaks of the lens elements. This attenuation occurs wherever the masking material contacts the surface of a lens element, thereby locally increasing the critical angle for total internal reflection (TIR) of light rays striking the rear of the lens elements. As is explained in the above mentioned patent, this increase of the critical angle decreases the range of angles from which image-forming light rays received at the rear of the screen will be totally reflected toward the light-emitting peaks of the respective lens elements. To minimize the total area of each lens element contacted by the masking material, thus minimizing the total surface area of the screen for which the TIR is reduced, U.S. Patent 4 605 283 proposes that the masking material be provided in the form of a multiplicity of small light-absorbing particles. Each particle makes minimal contact (e.g. point contact) with the outer surface of the lens element against which it is disposed, and the particles are contained within each groove by a layer extending between respective sidewalls of the lens elements which define the groove.

Selective deposition of the light-absorbing masking particles into the grooves of a lenticular screen such as that disclosed in the U.S. Patent 4 605 283 can be achieved by reasonably simple methods. Any particles which land on the rounded peaks of the disclosed lens elements can be wiped or jarred off and tend to drop into the grooves. However, selective deposition is more difficult with screens having peaks with concave central portions, such as are described in U.S. Patent 4 573 764 to Ralph H. Bradley. With such screens it has been found difficult to keep the deposited particles out of the concave portions of the peaks. It has also been found difficult to achieve uniform filling of the grooves with the particles. Both of these objectives must be achieved in order to ensure high brightness and high contrast of images formed on the screen.

Another problem experienced is associated with retaining the particles in the grooves without damaging the screen. In the screen masking arrangement of U.S. Patent 4 605 283, the layer containing the particles in each groove is preferably formed by heating the face of the screen until the uppermost particles in each groove fuse together. There is only a small margin of error between applying sufficient heat energy to fuse the uppermost particles into a layer and overheating the screen material (typically a plastic material such as polymethyl methacrylate) and causing optical distortion of the lenticules. It is the object of the invention to provide a light-transmissive screen having the light-absorbing masking particles affixed securely to the screen while both minimizing contact of the particles with the screen and preventing excessive heating of the screen.

The light-transmissive screen in accordance to the invention is therefore characterized in that said particles have a substantially higher microwave absorption coefficient than the screen, have an outer layer of heat-fusible light-absorbing material and are fixed to each other and to the screen. The light-absorbing particles in such a screen can be affixed to each other and to the screen by exposing the screen with loose particles in the grooves to microwave radiation thereby heating the particles and fusing them to each other while the screen is not directly heated. The screen in accordance to the invention can be further characterized in that the light-absorbing particles have an inner core of a material with a high microwave absorption material. Such particles are commonly available for use as toner particles in electro-photographic copying machines. Typically, such particles have an inner core of magnetically permeable material, and are covered with an outer layer of heat-fusible, light absorbing material. The particles are then affixed to the screen by heating the screen and the particles with microwave radiation of sufficient energy to fuse the particles to each other and to the screen. This radiation selectively heats the particles because their cores of magnetically permeable material have a microwave absorption coefficient which is substantially higher than that of the screen material. Conversely, the screen absorbs relatively little of the microwave energy, and is not sufficiently heated to effect distortion of the lenticules. The invention relates also to a method for manufacturing such a light-transmissive screen. A method in accordance with the invention is characterized in that said method comprises the following steps:
a) electrically charging the lenticule peaks with a charge having a predetermined polarity;
b) charging a quantity of light-absorbing particles to the same polarity as the lenticule peaks to effect repulsion of the particles from the peaks;
c) depositing a substantial quantity of the charged particles into the screen grooves; and
d) heating the screen and the deposited particles with microwave radiation of sufficient energy to fuse the particles to each other and to the screen, but of insufficient energy to optically distort the screen.

The particles are guided to the groove areas by electrically charging the lenticule peaks with a charge having a predetermined polarity and then depositing onto the screen a quantity of the particles, which have been electrically charged to the same polarity as the peaks. It has been found that the magnitudes of the electrical charges which can be accumulated on even the small lenticule peaks and particles involved are sufficiently large to effect repulsion of the particles from the peaks. Particle deposition continues until the grooves are filled to a predefined level. The particles are affixed by selectively heating them until they fuse to each other and to points of contact with the lenticule side-walls. In a preferred embodiment of the invention, the lenticule peaks are electrically charged by operating a corona discharge device near the peaks, and the charged particles are obtained by utilizing already-charged particles such as are commonly available for use as toner particles in electro-photographic copying machines. A further embodiment of the method in accordance with the invention is characterized in that said method comprises the following steps:
a) disposing near a supply of the light-absorbing particles a carrier sheet comprising a multiplicity of projections having tips including magnetically permeable material, said tips being shaped and spaced to positionally correspond with the grooves in the screen,
b) applying a magnetic field to the tips to effect attraction thereto of a substantial quantity of the particles;
c) continuing to apply the magnetic field while positioning the sheet and the screen such that the tips are proximately disposed with respect to the grooves;
d) reducing the strength of the magnetic field applied to the tips to a magnitude below that needed to maintain attraction of the particles to the tips, thereby effecting release of a substantial quantity of the particles from the tips and into the respective grooves to mask predefined portions of the sidewalls; and
e) heating the screen and the particles in the grooves with microwave radiation of sufficient energy to fuse to each other and to the screen, but of insufficient energy to optically distort the screen material.

The particles utilized each consist essentially of a magnetically permeable material and have heat-fusible outer surfaces. In a preferred embodiment, the particles are toner particles used in electro-photographic copying machines. A substantial quantity of these particles is guided to the grooves by magnetically attracting the particles to magnetically permeable projection tips on a carrier sheet which are spaced to positionally correspond with the grooves in the screen. These tips are then proximately disposed with respect to the grooves, and the magnetic attraction is reduced to effect release of a quantity of the particles into the grooves. The particles are affixed by selectively heating them until they fuse to each other and to points of contact with the lenticule sidewalls.

Preferably, the projections of the carrier sheet have tips which are coated with magnetically permeable material. A magnetic field is applied to the tips while the carrier sheet is disposed near a supply of the particles, and the magnetic field is maintained at a sufficient strength to retain the particles until the sheet is disposed in proximity to the screen such that the tips are opposite respective ones of the grooves. After the particles are released into the grooves, they are affixed to the screen by heating the screen and the particles with microwave radiation of sufficient energy to fuse the particles to each other and to the screen. This radiation selectively heats the particles because the magnetically permeable material in the particles has a microwave absorption coefficient which is substantially higher than that of the screen material. Conversely, the screen absorbs relatively little of the microwave energy, and is not sufficiently heated to effect distortion of the lenticules. Another embodiment of the method in accordance with the invention is characterized in that said method comprising the steps of:
a) filling the grooves to a predetermined depth with a slurry comprising a mixture of a volatile liquid and the light-absorbing particles, and
b) heating the screen and the particles in the grooves with microwave radiation of sufficient energy to fuse the particles to each other and to the screen, but of insufficient energy to optically distort the screen.

In a preferred embodiment of the invention, the particles are selectively provided in the grooves by applying a slurry comprising a mixture of a volatile liquid and the light-absorbing particles. The surface of the screen is wiped to effect uniform filling of the grooves while removing slurry from the peaks of the lenticules. This is more easily achieved than wiping off bare particles, because the wetted particles have less friction and tend to flow across the screen in front of the wiping implement carrying away particles which are on or near the peaks, even if the peaks are concave. After wiping, the volatile liquid quickly evaporates, leaving only the particles. Any particles which remain on the peaks after the application of microwave radiation can be readily removed by another wiping step, because they tend to be isolated and because they tend to fuse to the screen over only relatively small areas of contact. Conversely, each particle in a groove is generally secured by several points of contact with other particles and, if adjacent thereto, by a point of contact with the screen.

The invention will now be described by way of example with reference to exemplary drawing figures, of which:
Figure 1 illustrates electrical charging of lenticule peaks of a screen, shown in cross section;
Figure 2 illustrates selective deposition of charged light-absorbing particles in grooves of the screen;
Figure 3 illustrates heating of the particles deposited in the grooves by microwave radiation.
Figure 4 illustrates the magnetic attraction of light-absorbing particles to the tips of a carrier sheet;
Figure 5 illustrates selective deposition of the light-absorbing particles from the tips of a carrier sheet into grooves between lenticule peaks of a screen;
Figure 6 illustrates the spreading of a slurry containing light-absorbing particles across the surface of a lenticular screen, shown in cross-section;
Figure 7 illustrates the screen with the slurry deposited in the grooves between the lenticules.

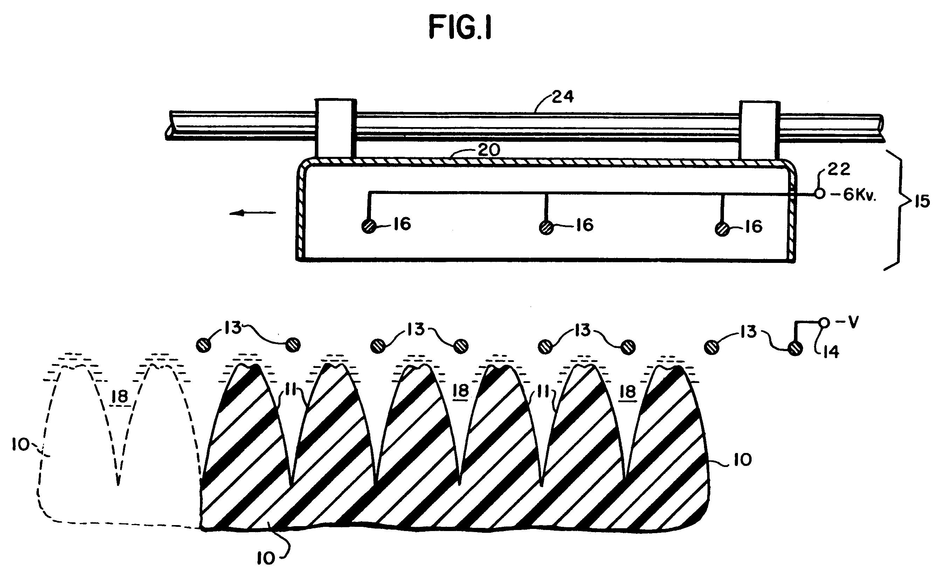

Figure 1 illustrates a preferred technique for charging the lenticule peaks of the screen. In accordance with this technique, a screen 10 having lenticules 11 is situated at a charging station which incorporates a corona charging device, for example one such as that described in U.S. Patent 3 475 169. This device includes a multiplicity of parallel grid conductors 13 electrically-connected to a terminal 14, and an ionizing device 15 positioned above the screen 10 and having a plurality of grid conductors 16 arranged parallel to the grid conductors 13.

A grid conductor 13 is disposed immediately above each screen groove 18, and runs the entire length of the groove. The grid conductors 16 also have lengths approximately equal to the groove lengths, but are partially enclosed in a grounded housing 20 and are electrically connected to a terminal 22. The housing 20 with the grid conductors 16 is movably mounted on a rail 24, enabling scanning of the housing across all of the grooves 18 in the screen.

In operation, a negative high voltage of approximately - 6 kV is applied to grid conductors 16 via terminal 22 while the ionizing device 15 is scanned across the peaks of the screen in the direction indicated by the arrow. Simultaneously, a negative voltage -V of much lower magnitude is applied to grid conductors 13 via terminal 14. The voltage applied to grid conductors 16 is sufficiently high to establish a corona discharge, and a negative ion cloud is formed in the space between the arrangement of grid conductors 13 and the arrangement of grid conductors 16. The negative ions in the cloud tend to pass to the screen through the grid formed by the conductors 13, but the negative potential applied to these conductors deflects the negative ions toward the peaks of the lenticules 11, thereby effectively shielding the grooves 18 and establishing negative charging of the peaks. The magnitude of the voltage -V is adjusted to a value necessary to achieve the desired deflection for the particular peak and groove dimensions and for the distance of the conductors 13 from the screen. Preferably, the ionizing device 15 is repeatedly scanned across the screen to obtain uniform negative charging of the lenticule peaks.

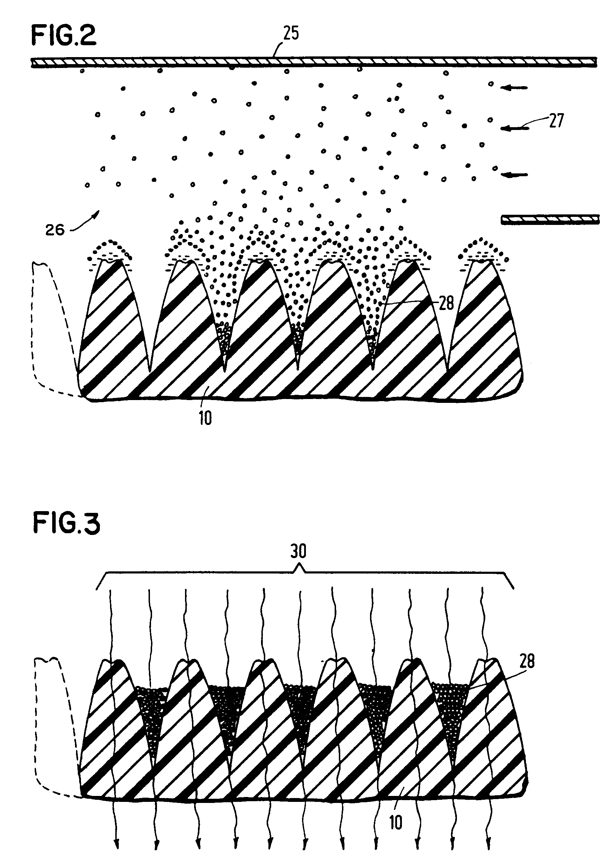

After charging, the screen is transported to a particle supply station where the particles are deposited in the grooves. One method of deposition is shown in Figure 2, where a cloud of uniformly-distributed, negatively charged particles 28 is continuously circulated in an enclosure 25 having an opening 26 disposed above the screen through which the particles drop, under the influence of gravity, onto the screen. The particles are circulated by means of an air flow indicated by arrows 27. As the particles 28 approach the screen, they are repelled by the negative charges on the peaks and fall into the grooves. Alternatively, the particles can be carried to a position above the screen by means such as a conductive plate to which they are attracted by an applied positive potential, and subsequently released by reversing the polarity of the applied potential. As another alternative, the screen can be inverted above a container of the negatively charged particles, and the particles can be attracted into the grooves by a positive potential applied to a conductive plate temporarily attached to the back of the screen.

A wide range of suitable particle sizes and compositions is available for deposition, as is described in the above-mentioned U.S. Patent 4 605 283. Especially suitable for electrostatic guidance into the grooves of a typical screen having a peak-to-peak spacing of approximately 300 µm are relatively-small particles, such as 0,5 µm diameter particles available from International Business Machines Corporation under part no. 1669070. Such small particles are easily repelled by the electrical charge on the peaks, statistically tend to uniformly fill the multiplicity of grooves, and have very small points of contact with the sidewalls of the lenticules, thus minimally influencing TIR.

After deposition of the particles in the grooves, the screen is moved to an affixing station, as is illustrated in Figure 3. At this station, the screen 10 and the particles in the grooves are heated with microwave radiation 30 of sufficient energy to fuse the particles 28 to each other and to the screen, without optically distorting the lenticules. The energy expended will depend on the size of the screen, the particle diameters, and the relative arrangement of the microwave source and the screen.

In a test, a 4,0 cm x 3,7 cm screen containing in its grooves particles having a diameter of about 75 µm available from 3M Company of St. Paul, MN. under part no. 50814-55, were optimally heated to fusion in a NORELCO Model 7100 microwave oven which was operated at 650 watts of microwave output power for four minutes. When heated for less than three minutes there was insufficient fusion of the particles to securely affix them in the grooves. When heated for over four minutes the particles tended to lose their spherical shape and made contact with substantial areas of the lenticule side walls, thereby adversely affecting TIR.

Numerous modifications of this method can be made without departing from the scope of the invention. For example, other types of particles could be used, such as metallic particles coated with plastic, or solid plastic particles of a composition which absorbs microwave energy. Also, the peaks of the lenticules can be charged by other techniques, such as by rubbing the peaks with a material such as polyethylene.

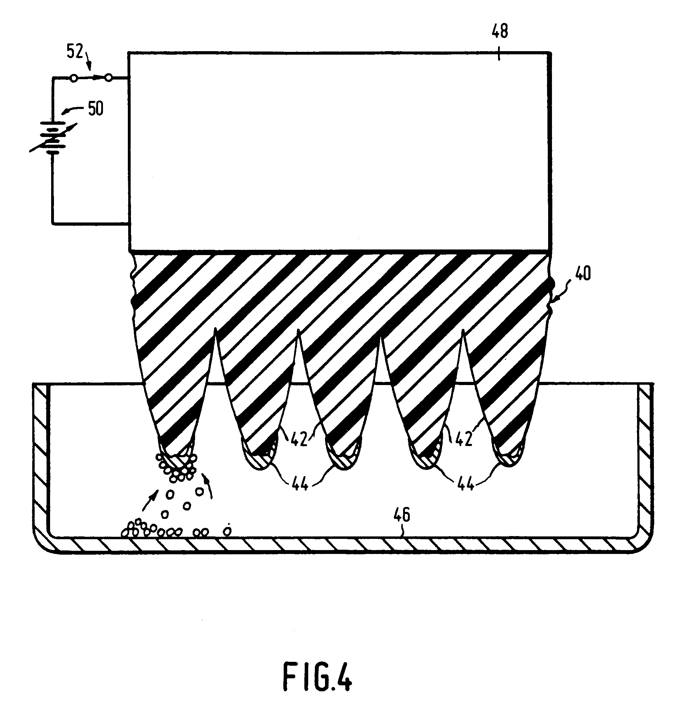

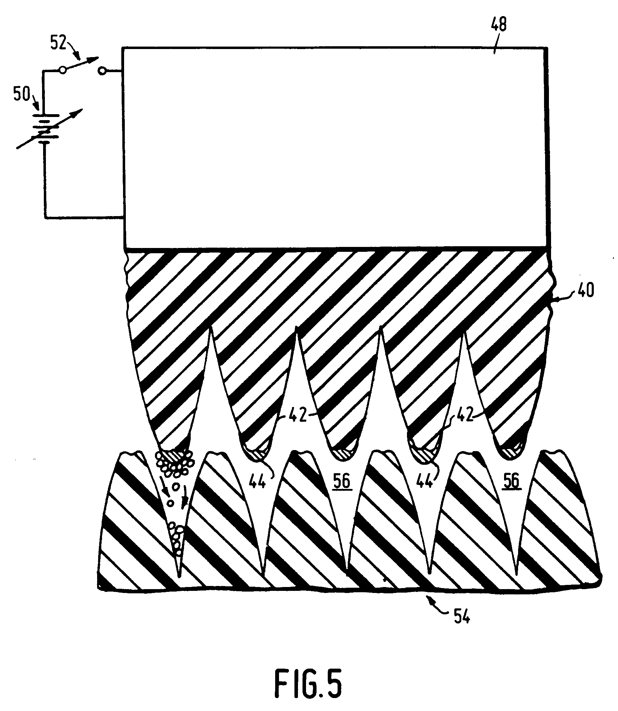

Figures 4 and 5 illustrate an alternative method for selective application of the light-absorbing particles to the screen.

Figure 4 shows a technique for attracting the light-absorbing particles to the tips of the carrier sheet. In accordance with this technique, a carrier sheet 40 with a multiplicity of projections 42 having tips coated with magnetically permeable material 44 is disposed above a supply of the particles contained within a receptacle 46. The tips of the projections must be shaped and spaced to substantially correspond with the grooves of the screen to be masked (see Fig 5). This can be easily achieved by making the carrier sheet from a replica of the plastic screen and depositing on the lens peaks of the replica a coating of a soft (i.e. easily magnetized/demagnetized) magnetically permeable material. A suitable material is nickel, or more preferably a nickel alloy such as that sold under the trademark PERMALLOY, which consists of about 80% nickel and 20% iron, by weight. Alternatively, an alloy having even lower hysteresis loss may be utilized, such as the nickel alloy sold under the trademark SUPERMALLOY which consists of 79% nickel, 16% iron, and 5% molybdenum by weight.

A wide range of suitable particle sizes and compositions is available for deposition, as is described in the above-mentioned U.S. Patent 4 605 283. Especially suitable for deposition into the grooves of a typical lenticular screen having peak-to-peak spacing of approximately 300 µm are relatively-large particles, such as the 75 µm diameter particles available from 3M Company of St. Paul, MN under part number 50814-55. These particles have sufficient magnetically permeable material to effect strong magnetic attraction to the coated tips of the carrier sheet in the presence of a magnetic field, have sufficient mass to effect separation from the tips when the magnetic field strength is intentionally reduced, and make relatively few points of contact with the side walls of the screen lenticules, thus minimally influencing TIR.

Magnetic attraction of the particles to the coated tips of the carrier sheet is effected by means of an electromagnet 48 attached to the back of the carrier sheet 40. The electromagnet can be readily constructed from a plurality of side-by-side electromagnetic chucks such as those available from McMaster-Carr Supply Co. of New Brunswick, NJ in a variety of sizes. DC power is applied to the electromagnet 48 by means of an adjustable-voltage DC source 50 through a switch 52 in series with the DC source. An adjustable 0-115 volts DC source especially adapted for use with the above-mentioned electromagnetic chucks is also available from McMaster-Carr Supply Co.

Particles are attracted to the tips 44 from the receptacle 46 by closing the switch 52 to effect production by the electromagnet 48 of a magnetic field. To simplify the drawing, only one tip is shown attracting particles, but in the actual process all tips attract particles from adjacent regions of the receptacle 46.

The electromagnet is oriented such that the magnetic field lines pass through the plastic carrier sheet 40 and the receptacle 46, with the field lines being concentrated by the magnetically permeable material coating at the tips 44. The quantity of particles attracted to the tips is controlled by adjusting the voltage produced by the DC source 50. This quantity need not be sufficient to fill the grooves of a screen to the desired level, because more than one transfer of particles from the tips to the grooves can be performed.

After attracting the particles to the tips, the carrier sheet is positioned above the screen to enable deposition of the particles into the grooves, as is illustrated in Figure 5. This positioning can most conveniently be accomplished by moving the screen 54 to be masked underneath the carrier sheet 40 such that the coated tips 44 are proximately disposed above respective grooves 56 of the screen. The switch 52 is then opened to instantaneously reduce to zero the strength of the magnetic field produced by the electromagnet 48, thereby effecting a sudden release of the particles from the tips 44 into the grooves 56. Any residual magnetism which inhibits release of the particles may be counteracted by vibrating the carrier sheet 40. (Only one tip is shown as depositing particles, but in the actual process all of the tips release particles into respective grooves).

Alternatively, release of the particles from the tips can be achieved in a controlled fashion by leaving the switch 52 in its closed position and adjusting the DC output voltage from source 50 to gradually reduce the magnetic field strength until a desired quantity of the particles falls into the grooves. This may be done with or without vibration of the carrier sheet. Ultimately, the quantity of particles deposited should fill the grooves to a predefined level which is determined by the optical design characteristics of the particular screen.

After deposition of the particles in the grooves, the screen is moved to an affixing station similar to the one as is already illustrated in Figure 3. As already described, the screen and the particles in the grooves are heated with microwave radiation of sufficient energy to fuse the particles to each other and to the screen, without optically distorting the lenticules.

Numerous modifications can be made to this method without departing from its scope. For example, other types of particles could be used, such as particles formed from a mixture of plastic material and high magnetic permeability material. Also, an adjustable-strength permanent magnet structure may be used in place of the electromagnet described in conjunction with Figures 4 and 5. Such a permanent magnet structure can be readily constructed from a plurality of side-by-side permanent magnetic chucks, which are also available from McMaster-Carr Supply Co. in a variety of sizes. These chucks are provided with means for positionally adjusting internal magnets to adjust the strengths of the magnetic fields applied to the tips of the carrier sheet.

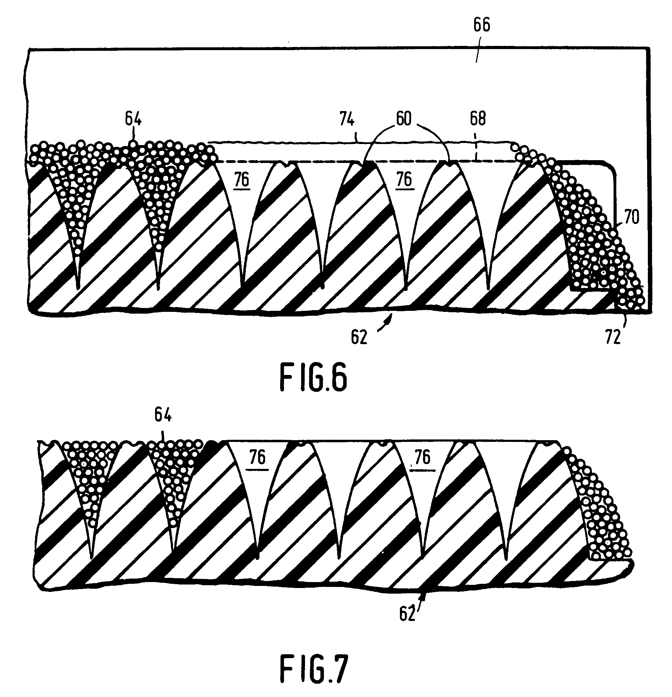

Figure 6 illustrates a third method in accordance to the invention for filing the grooves between lenticule peaks 60 of a screen 62 with a viscous slurry 64 containing light-absorbing particles. In accordance with this method, the viscous slurry is deposited at one end of the screen, and is spread across the screen by a doctor blade 66 having inner edges configured to contact the peaks of the lenticules and the screen edges on opposite sides of the screen. In this figure, only the right-hand portion of the screen 62 (shown in cross-section) and the right-hand portion of the doctor blade 66 are shown. Horizontal edge 68 of the blade contacts the lenticule peaks, and right-hand vertical edge 70 of the blade contacts the right-hand edge 72 of the screen. Preferably, at least the horizontal edge 68 of the blade is made from a material such as a plastic which will not scratch the lenticule peaks of the screen.

The manner in which the slurry is spread across the screen to fill the grooves can best be understood by referring to Figures 6 and 7 together, which respectively depict the operation of the doctor blade 66 and the resulting coverage of the screen with the slurry 64. At the instant depicted by Figure 6, the doctor blade 66 is moving towards the viewer and approaching the near end of the screen 62. The level 74 of the slurry pushed along in front of the blade has fallen substantially from its initial level, when it was deposited at the far end of the screen. The blade serves to both evenly fill the grooves 76 of the screen and to wipe the peaks so that substantially none of the particles in the slurry remain on the peaks. The horizontal blade edge 68 may be straight, as shown, or may be contoured to match the lenticule peaks which, in the exemplary screen disclosed, have longitudinally extending concave indentations. Such contouring will reduce the likelihood that light-absorbing particles will remain on the peaks after the blade has passed by, but is generally not necessary in view of the tendency of most particles in the indentations to flow along in front of the blade.

The blade edge 68 may also be contoured to protrude slightly into each groove 76, to establish a predetermined depth of the slurry in the grooves. This depth will be determined by the desired depth of the light-absorbing masking particles in the grooves, which in turn is determined by the optical design criteria for each particular screen.

The slurry itself is produced by mixing light-absorbing particles with a volatile liquid in proportions which produce the desired viscosity. The viscosity should be sufficiently high to prevent the slurry from draining out of the grooves and to minimize the amount of volatile liquid which must be evaporated, but it should be sufficiently low to ensure wetting of the particles, thereby minimizing their frictional contact with the screen surface. Volatile liquids which are especially suitable are alcohols, and in particular isopropyl alcohol.

With respect to the light-absorbing particles used in the slurry, a wide range of suitable sizes and compositions is available, as is described in the above-mentioned U.S. Patent 4 605 283. Especially suitable for slurry deposition into the grooves of a typical lenticular screen having peak-to-peak spacing of approximately 300 µm and having concave indentations in the lenticule peaks with a radius of curvature of approximately 50 µm are relatively-large particles, such as the 75 µm diameter particles available from 3M Company of St. Paul, MN under part no. 50814-55. These particles have the requisite high light absorbency, high microwave absorption coefficient, and surface fusibility when the particles are heated by exposure to microwave radiation. Their diameter is also sufficient to facilitate removal from the lenticule peaks by the horizontal blade edge 68 and to minimize the number of places where they contact the side-walls of the lenticules.

After deposition of the particles in the grooves, the screen is moved to an affixing station as was already illustrated in Figure 3. At this station, the screen and the particles in the grooves are heated with microwave radiation of sufficient energy to fuse the particles to each other and to the screen, without optically distorting the lenticules. The energy expended will depend on the size of the screen, the particle diameters, the amount of non-evaporated liquid remaining in the slurry, and the relative arrangement of the microwave source and the screen.

During this step, the particles will tend to settle in their respective grooves as the liquid in the slurry evaporates, and the initial level of the slurry left in the grooves must be high enough to compensate for such settling, to achieve the desired depth of the particles affixed in the grooves. After completion of this microwave heating step the lenticule peaks may once again be wiped by a blade to remove any particles remaining on the peaks.

Numerous variations of this method can be made without departing from the scope of the invention as claimed. For example, other types of particles which have a substantially higher microwave absorption coefficient than the screen material could be used. Examples are plastic-coated metal particles, plastic-coated metal-cored particles other than toner particles, and black-dyed polyvinyl-chloride plastic particles. Polyvinylchloride, unlike many other plastics, readily absorbs microwave radiation. Also, a much less viscous slurry may be utilized by, for example, containing the screen in a walled enclosure having a height approximately equal to the height of the lenticule peaks. Such a low-viscosity slurry might be useful in situations where particles otherwise tend to stick to the lenticule peaks of a screen.

## Claims

1. A light-transmissive screen (10) having a surface including a multiplicity of raised lenticules (11) having respective peaks and sidewalls, said sidewalls defining grooves (18) between the lenticules, in said grooves being deposited a multiplicity of light-absorbing particles (28), characterized in that laid particles have a substantially higher microwave absorption coefficient than the screen, have an outer layer of heat-fusible light-absorbing material and are fixed to each other and to the screen.

2. A light-transmissive screen (10) as claimed in Claim 1, characterized in that the light-absorbing particles (28) have an inner core of a material with a high microwave absorption material.

3. A light-transmissive screen (10) as claimed in Claim 1 or 2, characterized in that the particles (28) comprise inner magnetically permeable cores surrounded by out heat-fusible light-absorbing layers.

4. A light-transmissive screen (10) as claimed in Claim 1, 2 or 3, characterized in that the particles (28) have a nominal diameter that is smaller than approximately 150 µm.

5. A light-transmissive screen (10) as claimed in Claim 1, 2, 3 or 4, characterized in that the lenticule peaks have indented central portions.

6. A method for manufacturing a light-transmissive screen (10) as claimed in Claim 1, 2, 3, 4 or 5, characterized in that said method comprises the following steps:
a) electrically charging the lenticule peaks with a charge having a predetermined polarity;
b) charging a quantity of light-absorbing particles (28) to the same polarity as the lenticule peaks to effect repulsion of the particles from the peaks;
c) depositing a substantial quantity of the charged particles into the screen grooves (18); and
d) heating the screen and the deposited particles with microwave radiation of sufficient energy to fuse the particles to each other and to the screen, but of insufficient energy to optically distort the screen.

7. A method as claimed in Claim 6 characterized in that the particles (28) have a nominal diameter between approximately 0,5 µm and approximately 75 µm.

8. A method for manufacturing a light transmissive screen (10,54) as claimed in Claim 3, 4 or 5, characterized in that said method comprises the following steps:
a) disposing near a supply of the light-absorbing particles (28) a carrier sheet (40) comprising a multiplicity of projections (42) having tips including magnetically permeable material (44), said tips being shaped and spaced to positionally correspond with the grooves in the screen,
b) applying a magnetic field to the tips to effect attraction thereto of a substantial quantity of the particles;
c) continuing to apply the magnetic field while positioning the sheet and the screen such that the tips are proximately disposed with respect to the grooves;
d) reducing the strength of the magnetic field applied to the tips to a magnitude below that needed to maintain attraction of the particles to the tips, thereby effecting release of a substantial quantity of the particles from the tips and into the respective grooves to mask predefined portions of the sidewalls; and
e) heating the screen and the particles in the grooves with microwave radiation of sufficient energy to fuse to each other and to the screen, but of insufficient energy to optically distort the screen material.

9. A method as claimed in Claim 8, characterized in that the particles (28) have a nominal diameter between approximately 25 µm and 150 µm.

10. A method for manufacturing a light-transmissive screen (10) as claimed in Claim 1, 2, 3, 4 or 5, characterized in that said method comprises the steps of:
a) filling the grooves (76) to a predetermined depth with a slurry (64) comprising a mixture of a volatile liquid and the light-absorbing particles, and
b) heating the screen (62) and the particles in the grooves with microwave radiation of sufficient energy to fuse the particles to each other and to the screen, but of insufficient energy to optically distort the screen.

11. A method as in Claim 10, characterized in that the grooves (76) are filled to a predetermined depth with the slurry (64) by covering the entire screen surface with the slurry and then wiping the slurry from at least the peaks of the lenticules.

12. A method as in Claim 10 or 11, characterized in that the microwave radiation effects evaporation of the liquid portion of the slurry (64).

13. A method as in Claim 10, 11 or 12, characterized in that the volatile liquid consists essentially of an alcohol.

## Patentansprüche

1. Lichtdurchlässiger Schirm (10), von dem eine Oberfläche eine Vielzahl erhabener Linsen (11) mit jeweiligen Spitzen und Seitenwänden enthält, die Seitenwände Nuten (18) zwischen den Linsen definieren, in den Nuten eine Vielzahl lichtabsorbierender Teilchen (28) abgelagert wird, dadurch gekennzeichnet, daß die Teilchen einen wesentlich höheren Mikrowellenabsorptionskoeffizienten als der Schirm haben, eine Außenschicht von wärmeverschmelzbarem lichtabsorbierendem Material und aufeinander und auf dem Schirm angeheftet sind.

2. Lichtdurchlässiger Schirm (10) nach Anspruch 1, dadurch gekennzeichnet, daß die lichtabsorbierenden Teilchen (28) einen Innenkern aus einem Material enthalten, das einen Material mit hoher Mikrowellenabsorption enthält.

3. Lichtdurchlässiger Schirm (10) nach Anspruch 1 oder 2, dadurch gekennzeichnet, daß die Teilchen (28) innere magnetisch permeable Kerne enthalten, die von hitzeverschmelzbaren lichtabsorbierenden Schichten umgeben sind.

4. Lichtdurchlässiger Schirm (10) nach Anspruch 1,2 oder 3, dadurch gekennzeichnet, daß die Teilchen (28) einen Nenndurchmesser haben, der kleiner ist als etwa 150 µm.

5. Lichtdurchlässiger Schirm (10) nach Anspruch 1, 2, 3 oder 4, dadurch gekennzeichnet, daß die Linsenspitzen eingeschnittene Mittelteile besitzen.

6. Verfahren zum Herstellen eines lichtdurchlässigen Schirms (10) nach Anspruch 1,2,3,4 oder 5, dadurch gekennzeichnet, daß das Verfahren folgende Schritte umfaßt:
a) das elektrisches Aufladen der Linsenelementspitzen mit einer Ladung mit einer vorgegebenen Polarität,
b) das Aufladen einer Menge lichtabsorbierender Teilchen (28) auf die gleiche Polarität wie die Linsenspitzen zum Bewirken einer Abstoßung der Teilchen von den Spitzen,
c) das Ablagern einer wesentlichen Menge der geladenen Teilchen in die Schirmnuten (18), und
d) das Erhitzen des Schirmes und der abgelagerten Teilchen mittels Mikrowellenstrahlung ausreichender Energie zum Verschmelzen der Teilchen miteinander und mit dem Schirm, aber mit ungenügender Energie zum optischen Verzerren des Schirmes.

7. Verfahren nach Anspruch 6, dadurch gekennzeichnet, daß die Teilchen (28) einen Nenndurchmesser zwischen etwa 0,5 µm und etwa 75 µm besitzen.

8. Verfahren zum Herstellen eines lichtdurchlässigen Schirms (10,54) nach Anspruch 3, 4 oder 5, dadurch gekennzeichnet, daß das Verfahren folgende Schritte umfaßt:
a) das Anbringen einer Trägerplatte (40) nahe bei einer Speisequelle der lichtabsorbierenden Teilchen (28), wobei die Platte eine Vielzahl von Vorsprüngen (42) mit Spitzen enthält, die magnetisch permeables Material (44) enthalten, und diese Spitzen zum stellenbedingten Entsprechen der Nuten im Schirm ausgebildet und im Abstand voneinander liegen,
b) das Erzeugen eines Magnetfelds an den Spitzen zum Bewirken einer Anziehungskraft für eine wesentliche Menge der Teilchen,
c) das ununterbrochene Erzeugen des Magnetfelds, wenn die Platte und der Schirm derart positioniert werden, daß die Spitzen sich etwa zur Stelle der Nuten befinden,
d) das Reduzieren der Stärke des an den Spitzen erzeugten Magnetfelds auf eine Größe unter die zum Aufrechterhalten der Anziehungskraft der Teilchen zu den Spitzen, wobei eine Freigabe einer wesentlichen Menge der Teilchen von den Spitzen und in die jeweiligen Nuten zum Maskieren vordefinierter Teile der Seitenwände ausgelöst wird, und
e) das Erhitzen des Schirms und der Teilchen in den Nuten mit Mikrowellenstrahlung ausreichender Energie zum Verschmelzen miteinander und mit dem Schirm, aber mit ungenügender Energie zum optischen Verzerren des Schirmmaterials.

9. Verfahren nach Anspruch 8, dadurch gekennzeichnet, daß die Teilchen (28) einen Nenndurchmesser zwischen etwa 25 µm und 150 µm besitzen.

10. Verfahren zum Herstellen eines lichtdurchlässigen Schirms (10) nach Anspruch 1, 2, 3, 4 oder 5, dadurch gekennzeichnet, daß dieses Verfahren folgende Schritte umfaßt:
a) das Ausfüllen der Nuten (76) bis zu einer vorgegebenen Tiefe mit einer Suspension (64), die aus einer Mischung einer flüchtigen Flüssigkeit und der lichtabsorbierenden Teilchen besteht, und
b) das Erhitzen des Schirms (62) und der Teilchen in den Nuten mittels Mikrowellenstrahlung ausreichender Energie zum Verschmelzen der Teilchen miteinander und mit dem Schirm, aber mit ungenügender Energie zum optischen Verzerren des Schirms.

11. Verfahren nach Anspruch 10, dadurch gekennzeichnet, daß die Nuten (76) bis zu einer vorgegebenen Tiefe mit der Suspension (64) gefüllt werden, indem die ganze Schirmoberfläche mit der Suspension bedeckt und die Suspension wenigstens von den Spitzen der Linsen abgewischt wird.

12. Verfahren nach Anspruch 10 oder 11, dadurch gekennzeichnet, daß die Mikrowellenstrahlung eine Verdampfung des flüssigen Teils der Suspension (64) bewirkt.

13. Verfahren nach Anspruch 10, 11 oder 12, dadurch gekennzeichnet, daß die flüchtige Flüssigkeit im wesentlichen aus einem Alkohol besteht.

## Revendications

1. Ecran transparent à la lumière (10) présentant une surface comportant une multiplicité de lentilles en relief (11) présentant des crêtes et des faces latérales correspondantes, lesdites faces latérales définissant des gorges (18) situées entre les lentilles, une multiplicité de particules d'absorption de lumière (28) étant introduites dans lesdites gorges, caractérisé en ce que lesdites particules présentent un coefficient d'absorption de microondes sensiblement supérieur à celui de l'écran, en ce qu'elles présentent une couche extérieure en matériau d'absorption de lumière fusible par chaleur, et en ce qu'elles sont fixées les unes aux autres ainsi qu'à l'écran.

2. Ecran transparent à la lumière (10) selon la revendication 1, caractérisé en ce que les particules d'absorption de lumière (28) présentent une âme en matériau ayant un coefficient d'absorption de micro-ondes élevé.

3. Ecran transparent à la lumière (10) selon la revendication 1 ou 2, caractérisé en ce que les particules (28) comportent des âmes magnétiquement perméables enveloppées par des couches extérieures d'absorption de lumière fusibles par chaleur.

4. Ecran transparent à la lumière (10) selon la revendication 1, 2 ou 3, caractérisé en ce que les particules (28) présentent un diamètre nominal inférieur à approximativement 150 µm.

5. Ecran transparent à la lumière (10) selon la revendication 1, 2, 3 ou 4, caractérisé en ce que les crêtes de lentille présentent des parties centrales creuses.

6. Procédé pour la fabrication d'un écran transparent à la lumière (10) selon la revendication 1, 2, 3, 4 ou 5, caractérisé en ce que ledit procédé comporte les étapes suivantes:
a) charger électriquement les crêtes de lentille d'une charge présentant une polarité prédéterminée;
b) charger une quantité de particules d'absorption de lumière (28) de manière à présenter la même polarité que les crêtes de lentille pour réaliser que les particules sont repoussées des crêtes;
c) introduire dans les gorges d'écran (18) une quantité sensible de particules chargées; et
d) chauffer l'écran ainsi que les particules introduites par rayonnement à micro-ondes présentant une énergie suffisant pour fixer par fusion les particules entre elles ainsi qu'à l'écran, mais d'une énergie insuffisante pour provoquer une distorsion optique de l'écran.

7. Procédé selon la revendication 6, caractérisé en ce que les particules (28) présentent un diamètre nominal compris entre approximativement 0,5 µm et approximativement 75 µm.

8. Procédé pour la fabrication d'un écran transparent à la lumière (10, 54) selon la revendication 3, 4 ou 5, caractérisé en ce que ledit procédé comporte les étapes suivantes:
a) disposer à proximité d'une amenée de particules d'absorption de lumière (28) une feuille de support (40) comportant une multiplicité de saillies (42) présentant des pointes comportant du matériau magnétiquement perméable (44), lesdites pointes étant façonnées et espacées de manière que leurs positions correspondent aux gorges dans l'écran,
b) appliquer un champ magnétique aux pointes pour attirer une quantité sensible des particules;
c) continuer à appliquer un champ magnétique en positionnant la feuille et l'écran de manière que les pointes sont disposés approximativement par rapport aux gorges,
d) réduire l'intensité du champ magnétique appliqué aux pointes à une magnitude inférieure à celle nécessaire pour maintenir l'attraction des particules vers les pointes, de ce fait une quantité sensible des particules sont libérées et tombent dans les gorges correspondantes pour masquer des parties prédéfinies des faces latérales; et
e) chauffer l'écran ainsi que les particules introduites dans les gorges par rayonnement à micro-ondes présentant une énergie suffisant pour fixer par fusion les particules entre elles ainsi qu'à l'écran, mais d'une énergie insuffisante pour provoquer une distorsion optique de l'écran.

9. Procédé selon la revendication 8, caractérisé en ce que les particules (28) présentent un diamètre nominal compris entre approximativement 25 _{/}m et 150_{/}m.

10. Procédé pour la fabrication d'un écran transparent à la lumière (10) selon la revendication 1, 2, 3, 4, ou 5, caractérisé en ce que ledit procédé comporte les étapes pour:
a) remplir les gorges (76) jusqu'à une profondeur prédéterminée d'une bouillie (64) comportant un mélange constitué d'un liquide volatil et de particules d'absorption de lumière, et
b) chauffer l'écran (62) et les particules situées dans les gorges par rayonnement à micro-ondes présentant une énergie suffisant pour réunir par fusion les particules les unes aux autres ainsi qu'à l'écran, mais d'une énergie insuffisante pour provoquer une distorsion optique de l'écran.

11. Procédé selon la revendication 10, caractérisé en ce que les gorges (76) sont remplies jusqu'à une profondeur prédéterminée de la bouillie (64) en couvrant toute la surface d'écran de la bouillie et en enlevant ensuite la bouillie en essuyant au moins les crêtes de lentille.

12. Procédé selon la revendication 10 ou 11, caractérisé en ce que le rayonnement à micro-ondes provoque l'évaporation de la partie liquide de la bouillie (64).

13. Procédé selon la revendication 10, 11 ou 12, caractérisé en ce que le liquide volatile est essentiellement constitué d'un alcool.
